(19) **Europäisches Patentamt / European Patent Office / Office européen des brevets**

(11) **EP 1 226 707 B1**

(12) **EUROPEAN PATENT SPECIFICATION**

(45) Date of publication and mention
of the grant of the patent:
**14.05.2008 Bulletin 2008/20**

(51) Int Cl.:
*H04M 3/30* (2006.01)   *H04B 3/46* (2006.01)

(21) Application number: **00968176.8**

(22) Date of filing: **26.10.2000**

(86) International application number:
**PCT/IB2000/001550**

(87) International publication number:
**WO 2001/033823 (10.05.2001 Gazette 2001/19)**

(54) **SUBSCRIBER LINE TEST SYSTEM**

TEILNEHMERLEITUNGSTESTSYSTEM

SYSTEME DE TEST DE LIGNE D'ABONNE

(84) Designated Contracting States:
**AT BE CH CY DE DK ES FI FR GB GR IE IT LI LU MC NL PT SE**

(30) Priority: **04.11.1999 ZA 9906943**
**09.11.1999 ZA 9907016**

(43) Date of publication of application:
**31.07.2002 Bulletin 2002/31**

(60) Divisional application:
**08153027.1**

(73) Proprietor: **Spescom Limited**
**Midrand 1685 (ZA)**

(72) Inventors:
• **HARRISON, Ian**
**Tygervalley**
**7530 (ZA)**
• **CHESTER, Steven, John**
**ve**
**Tygervalley**
**7530 (ZA)**
• **CRONE, Vivian, John**
**2094 Johannesburg (ZA)**
• **DU RAND, Andre**
**0157 Pretoria (ZA)**
• **FOUCHE, Pierre, Ivor**
**1708 Johannesburg (ZA)**
• **WEISS, Martin**
**Bryanston**
**2021 (ZA)**

(74) Representative: **Murnane, Graham John et al**
**Murgitroyd & Company**
**165-169 Scotland Street**
**Glasgow G5 8PL (GB)**

(56) References cited:
US-A- 3 210 656     US-A- 4 486 627
US-A- 4 815 119     US-A- 5 402 073
US-A- 5 661 776

• TAMIO MOTOMITSU ET AL: "DEVELOPMENT OF CENTRALIZED LOOPTESTING SYSTEM FOR SUBSCRIBER LOOPS" NTT REVIEW,JP, TELECOMMUNICATIONS ASSOCIATION, TOKYO, vol. 3, no. 1, 1991, pages 117-121, XP000223906

**Description**

THIS INVENTION relates to telecommunications. It relates in particular to a system for, and method of, testing a telecommunication line. It also relates to a slave device and to central testing apparatus for use in the system and method.

US 5, 661, 776 discloses a network termination unit comprising a plurality of semiconductor switches electrically connected to conductors of a telephone line to establish a network of electrical paths capable of altering the electrical condition of the telephone line when caused to assume a state of condition, wherein a logic module causes the switches to assume either a closed or an opened condition in accordance with a predetermined sequence established by a hard-wired program.

US 4, 486, 627 discloses a cable load status detector for monitoring the admittance of a line during a frequency sweep which upon detection of the characteristic admittance level determines with loaded or unloaded status of a transmission line, wherein an output logic associated with detection circuits provides a digital to indication of the status detected.

According to the invention, there is provided a system for testing a telecommunication line as defined in claim 1, more particularly a system including a central unit including signal generation means capable of generating a test signal of Increasing amplitude, the signal generation means being operatively connected to an exchange end of the line ; comparator means connected to the signal generation means; at least one remote unit connectable to a subscriber unit end of the line, the remote unit being operable under control of the central unit selectively to disconnect the subscriber unit; and threshold detection means for detecting when the test signal reaches a predetermined threshold after having travelled along the line and, in response thereto, the comparator means compares the predetermined threshold with the amplitude of the test signal applied to the line when the predetermined threshold is reached.

Preferably, the central unit includes line connection means for progressively connecting the signal generation means to a plurality of lines in an automated fashion thereby to test a plurality of lines.

In order to facilitate use of the device in the field, the system may include a portable housing in which the central unit is mounted. In certain embodiments of the invention, the threshold detection means is provided in the central unit and connected in a series configuration. However, in other embodiments, the threshold detection means is provided in the remote unit.

The remote unit may include a controller, typically a microprocessor based controller, for controlling operation of the unit and shorting means connected to the subscriber unit end of the line. The controller may be responsive to the threshold detection means and, when the predetermined threshold is reached, the controller may be operable to activate the shorting means to short-circuit the line in response to which the comparator means compares the predetermined threshold with the amplitude of the test signal applied to the line.

In more sophisticated embodiments of the invention, the test signal is of a set frequency and of increasing amplitude, the threshold detection means including filter means for filtering the test signal received by the threshold detection means. The test signal is typically a sine wave signal, the actual frequency of the signal differing in various different applications.

Preferably, the filter means is an adjustable filter operable to adjust its filtering characteristics under control of the controller. For example, the filter may be a bandpass filter and the controller may be operable to adjust its centre frequency upon command from the central unit.

The signal generation means may be operable selectively to generate a plurality of test signals at different frequencies and the controller may adjust the centre frequency of the filter to correspond to the frequency of the particular test signal.

Advantageously, the remote device may include a power supply unit which sources power from the telecommunication line and powers circuitry of the remote device.

The remote unit may include a subscriber line interface circuit capable of protecting the subscriber unit. In addition or instead, the system may include switching means operable selectively to connect and to disconnect the subscriber unit and the threshold detection means to and from the line.

Further in accordance with the invention, there is provided a method of testing a telecommunication line as defined in claim 15, more particularly a method including applying a test signal of increasing amplitude to the line ; sensing when the amplitude of the test signal reaches a predetermined threshold after having travelled along the line ; and comparing the predetermined threshold and the amplitude of the test signal applied to the line when the predetermined threshold is reached.

The method may include applying the test signal progressively in an automated fashion to a plurality of lines thereby to test the plurality of lines one at a time.

In certain circumstances, the predetermined threshold is sensed at a subscriber unit end of the line. In other circumstances, the predetermined threshold is sensed at an exchange end of the line.

The method may include shorting a subscriber unit end of the line when the predetermined threshold is reached to trigger the comparison between the predetermined threshold and the amplitude of the test signal applied to the line.

The method may include applying a test signal of a set frequency and increasing amplitude to the line. Preferably, the method includes applying a plurality of test signals at different frequencies and adjusting a centre frequency of a filter at the subscriber unit end of the line and sensing when the predetermined threshold is reached at each different frequency.

In certain embodiments, the remote device includes a power supply unit which sources power from the telecommunication line and powers circuitry of the remote device.

The remote unit may include a subscriber line interface circuit capable of protecting the subscriber unit. Further, the slave unit may include switching means operable selectively to connect and to disconnect the subscriber unit and the threshold detection means to and from the line.

Still further in accordance with the invention, there is provided a central testing apparatus for testing at least one telecommunication line as defined in claim 22, more particularly the aforementioned apparatus which is connectable to an exchange end of the line and including a central unit including control means for controlling operation of a slave device operatively connected to a subscriber unit end of the line ; signal generation means capable of applying a test signal of increasing amplitude to the line ; and comparator means to compare the amplitude of the test signal applied to the line with the predetermined threshold when the slave device detects that the amplitude of the test signal has reached the predetermined treshold after having travelled along the line.

The central unit may include line connection means for progressively connecting the signal generation means to a plurality of lines In an automated fashion thereby to test a plurality of lines. The apparatus may include a portable housing in which the central unit is mounted.

The apparatus typically includes sensing means for sensing when the line is shorted and, in response thereto, the comparator means compares the predetermined threshold with the amplitude of the test signal.

The signal generation means may be operable selectively to generate a plurality of test signals at different frequencies and provide an instruction signal to the slave device to adjust a centre frequency of its filter to correspond to the frequency of the particular test signal.

It is to be appreciated that for the purposes of this specification the term "slave device" is intended to include so-called maintenance termination units (MTUs), or the like.

The invention is now described, by way of example, with reference to the accompanying diagrammatic drawings.

In the drawings,

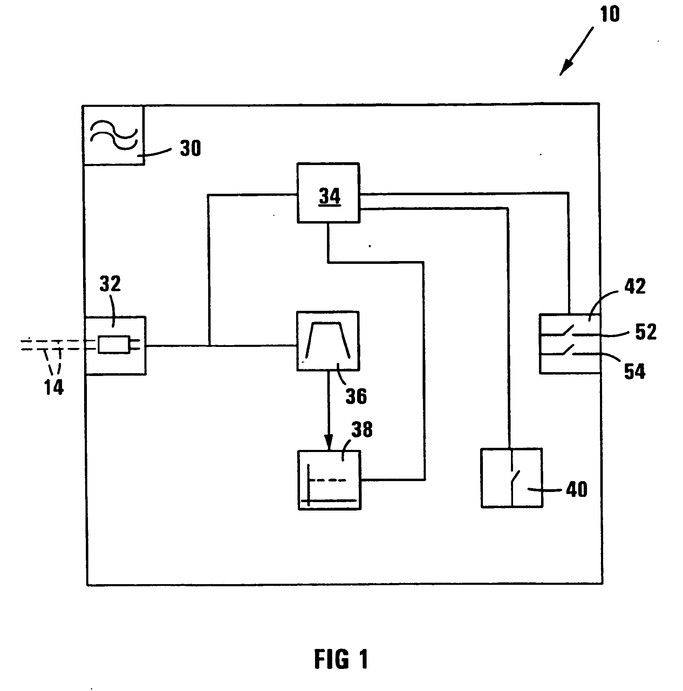

Figure 1 shows a schematic block diagram of a slave device in accordance with the invention;
Figure 2 shows a schematic block diagram of a system, also in accordance with the invention, which includes the slave device of Figure 1;
Figure 3 shows a schematic block diagram of a further embodiment of the system, in accordance with the invention, which includes a threshold detector located in a central unit of the system;

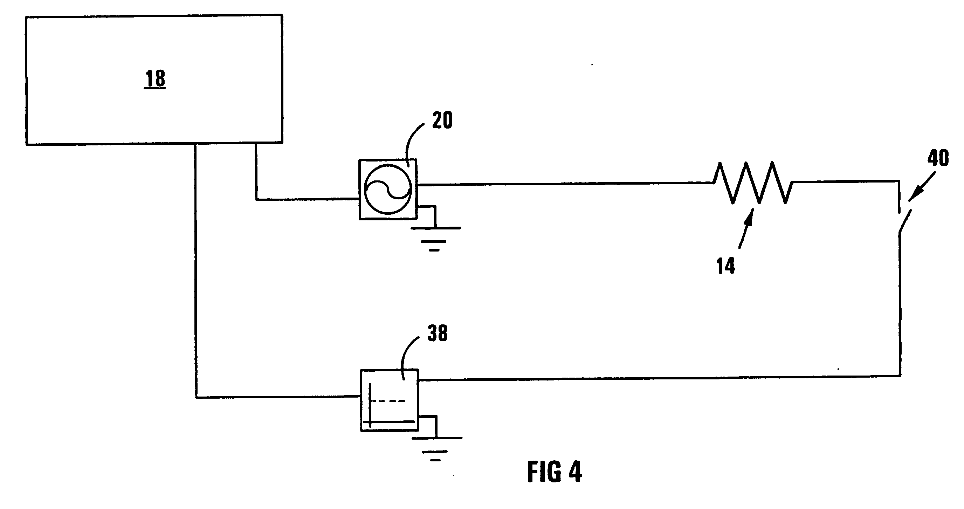

Figure 4 shows a schematic equivalent circuit of the system of Figure 3;
Figure 5 shows a schematic flow chart of operations carried out by the central unit;
Figure 6 shows a schematic flow chart of operations carried out by the slave device of Figure 1;
Figure 7 shows a schematic block diagram of a yet further embodiment of the system, also in accordance with the invention, for testing a telecommunication line;
Figure 8 shows a graphic representation of a test signal applied to the line by a central unit of the system;
Figure 9 shows a graphic representation of the test signal received at a slave unit or MTU of the system of Figure 7;
Figure 10 shows a graphic representation of the normalised loss on the telecommunication line; and
Figure 11 shows an equivalent circuit of the telecommunication line.

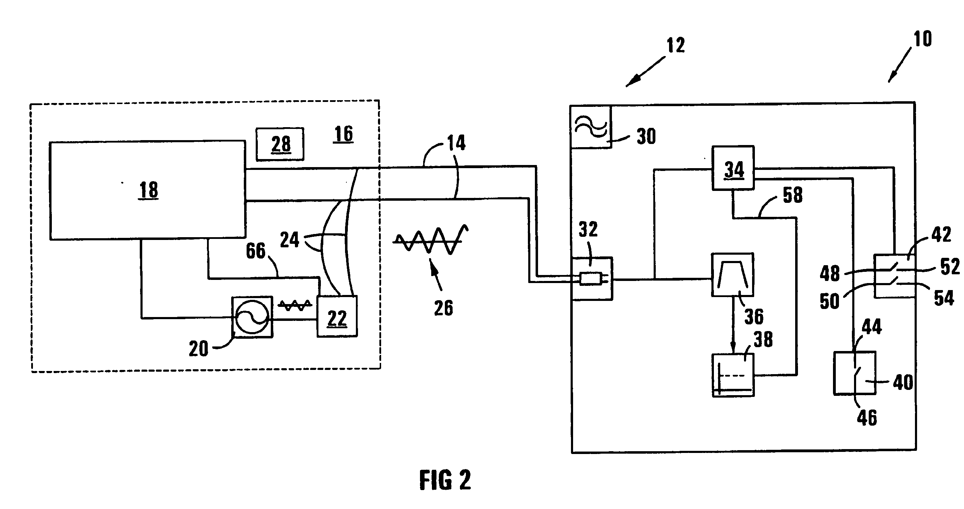

Referring to the drawings, reference numeral 10 generally indicates a slave device in accordance with the invention. The device 10 forms part of a system 1 2 (see Figure 2), also in accordance with the invention, for testing attenuation on a telecommunication line 14. The system 12 further includes a central unit 16 which is typically connected at an exchange end of the line 14. As described in more detail below, the system 12 is operable to perform maintenance tests on the telecommunication line 14 in a single ended testing fashion.

The central unit 16 includes a remote test unit (RTU) 18, a signal generator 20, and a variable gain amplifier 22 connected via lines 24 to the telecommunication line 14. In use, the signal generator 20 and the variable gain amplifier 22 generate a test signal 26 which is sequentially applied to a plurality of telecommunication lines by means of a switching arrangement 28 thereby sequentially to test the lines.

Each telecommunication line 14 connected to the central unit 16 includes a slave device 10 which is serially connected to customer premises equipment (CPE) such as a subscriber telephone unit or the like. The device 10 includes a power supply unit 30, a subscriber line interface circuit or SLIC 32, a microprocessor based controller 34, filter means in the form of a bandpass filter 36, a threshold detector 38, a short circuit switch 40, and CPE disconnect switches 42.

Contacts 44, 46 of the short circuit switch 40, and contacts 48, 50 of the CPE disconnect switches 42 are connected to the telecommunication line 14. Contacts 52, 54 of the CPE disconnect switches 42 are connected to the subscriber telephone unit. The CPE disconnect switches 42 selectively connect and disconnect the customer premises equipment or subscriber unit to the line 14 on command from the central unit 16.

The subscriber line interface circuit or SLIC 32 provides protection to customer premises equipment and to the slave device 10 against voltage surges, lightning spikes, or the like. Optionally, the SLIC 32 also matches the impedance of the various components of the device 10 to the line 14.

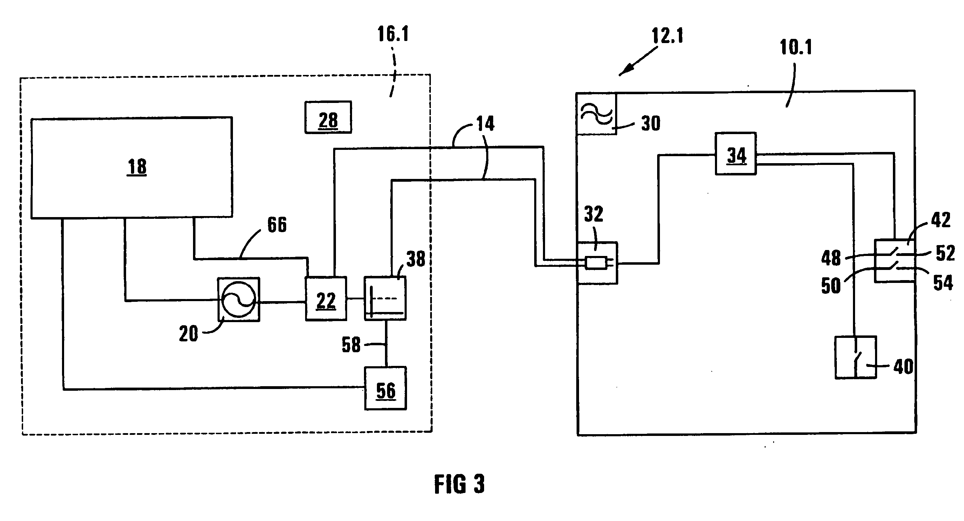

Referring in particular to Figure 3 of the drawings, reference numeral 12.1 generally indicates a further embodiment of a system, in accordance with the invention, for testing the telecommunication line 14. The system 12.1 substantially resembles the system 12 and, accordingly, like reference numerals have been used to indicate the same or similar features unless otherwise indicated.

The main difference between the system 12.1 and the system 12, is that the threshold detector 38 is not provided in the slave device 10.1 but rather in the central unit 16.1. Further, the central unit 16.1 includes a microprocessor 56 which is connected to the threshold detector 38 via line 58. As described in more detail below, during operation of the systems 12 and 12.1, the RTU 18 instructs the microprocessors 34 and 56 respectively to monitor the threshold detector 38 to ascertain when the predetermined threshold is reached. Further, once the predetermined threshold is reached, the microprocessors 34 and 56 instruct the RTU accordingly.

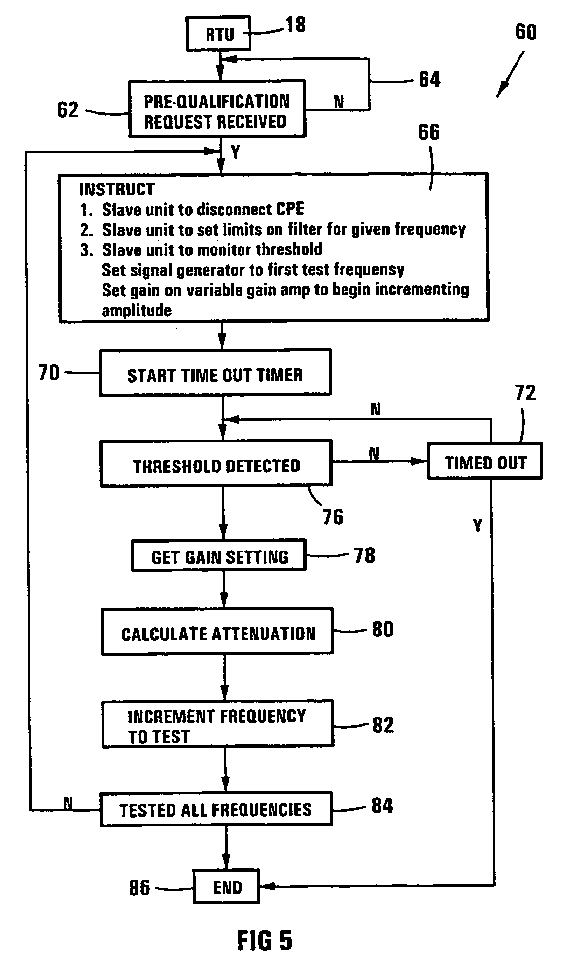

Referring in particular to Figure 5 of the drawings, reference numeral 60 generally indicates a schematic flow chart of various functions or operations performed by the central unit 16, 16.1. As mentioned above, the central unit 16, 16.1 is operable sequentially to test or perform prequalification tests on a plurality of different telecommunication lines 14. Initially, the RTU 18 awaits a request for prequalification testing as shown at block 62. If no test request is received, the system loops as shown at line 64 until a request is received.

If, however, a request for testing of a particular telecommunication line 14 is received, as shown at block 66, the central unit 16, 16.1 applies an instruction signal on the telecommunication line 14 to which the slave device 10, 10.1 is responsive. In particular, the instruction signal is fed into the device 10, 10.1 via the SLIC 32 and, upon receipt of the instruction signal, the microprocessor 34 switches the CPE disconnect switches 42 thereby to disconnect any customer premises equipment from the line 14. Thereafter, the RTU 18 selects a first frequency at which the line 14 is to be tested.

Operation of the System 12

In the system 12, the RTU 18 instructs the frequency generator 20 to generate a test signal at the particular frequency and also sends a frequency instruction signal along the line 14 to which the device 10 is responsive. In particular, upon receipt of the frequency instruction signal, the controller 34 adjusts a centre frequency of the bandpass filter 36 thereby to filter out any signals not at the particular selected frequency. The signal 26 which is sourced from the signal generator 20 and progressively amplified by the variable gain amplifier 22, is applied to the line 14 and therefore received by the slave device 10. The test signal 26 is fed through the bandpass filter 36 to the threshold detector 38 to monitor the amplitude of the test signal 26. When the test signal 26, after a period of time, has reached the predetermined threshold of the threshold detector 38, the event is detected by the controller 34 as shown by line 58. The controller 34 then activates the short circuit switch 40 which, accordingly, short-circuits the line 14. The central unit 16 detects that the line has in fact been shorted and measures the particular amplitude of the test signal 26 at which the short circuit switch 40 was triggered. The RTU 18, which is connected via line 66 to the variable gain amplifier 22, then calculates line attenuation by comparing the amplitude of the test signal transmitted with the predetermined threshold of the threshold detector 38. For example, the loss along the line 14 may be calculated as follows:

$$dB_{loss} = -10Log_{10} \quad \underline{\frac{\text{Amplitude of test signal x } A_{VG}}{\text{Predetermined threshold}}}$$

Once the test signal 26 at a particular frequency with an increasing amplitude has been applied to the line 14, a timer is started as shown at block 70 (see Figure 5). If the duration of the timer has lapsed (see block 72), then the test procedure is terminated as shown at 74. If, however, the timeout duration has not lapsed, then the threshold detector 38 monitors to ascertain whether or not the predetermined threshold has been reached as shown at block 76. If the predetermined threshold has been reached, the RTU 18 obtains the gain ($A_{VG}$) of the variable gain amplifier 22 via line 66 as shown at block 78. Thereafter, the RTU 18 calculates the attenuation as described above and shown at block 80. The selected frequency is then incremented by the RTU 18 and the signal generator 20 is then instructed to generate the next frequency as shown at block 82. The aforementioned procedure is followed until the different frequencies have been tested as shown at block 84 whereafter the test procedure is terminated as shown at 86.

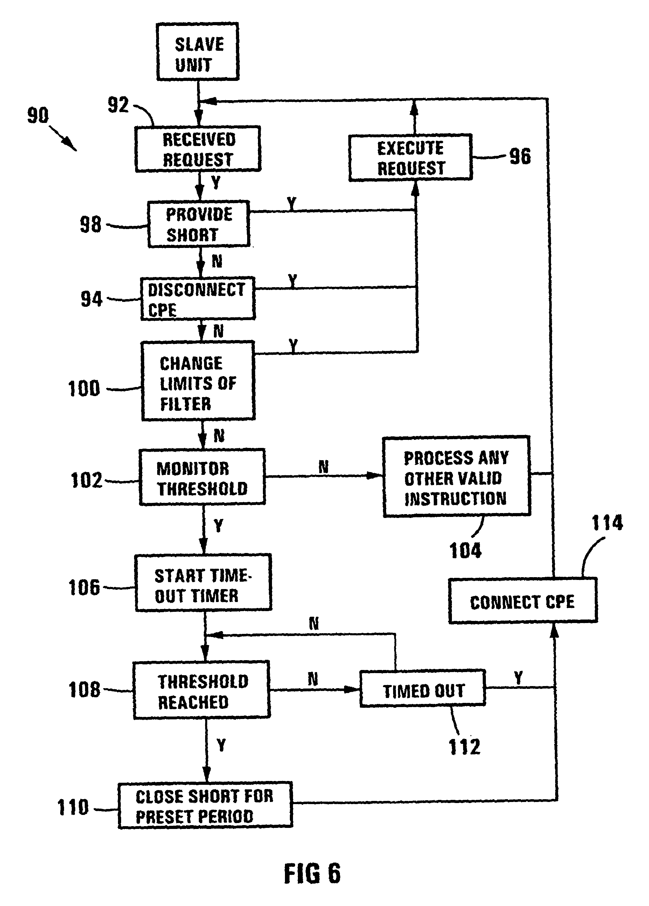

Referring in particular to Figure 6 of the drawings, reference numeral 90 generally indicates a schematic flow chart of various functions or operations performed by the slave device 10, 10.1. As shown at block 92, the device 10 enters a wait cycle until a prequalification test request signal is received from the central unit 16. Upon receipt of a request signal the CPE is disconnected (see block 94). Thereafter, upon receipt of a frequency instruction signal from the central unit 16, the centre frequency of the filter 36 is changed as shown at block 100. The test signal is then monitored to ascertain when the predetermined threshold is reached as shown at block 108. Once the threshold is reached, as described above, line 14 is shorted by the short circuit switch 40 as shown at block 110. Thereafter, upon receipt of a further frequency instruction signal from the central unit 16, the centre frequency of the filter 36 is changed as shown at block 100. The test signal is continuously monitored to ascertain whether or not the predetermined threshold has been reached as shown at block 108 and, if not, any other valid instructions received from the central unit 16, are processed as shown at block 104.

As shown at block 106, a timer is started and, if a threshold has been reached as shown at block 108, the short circuit switch 40 is activated as shown at block 110. As shown at block 112, the duration of the timer is monitored and, if the predetermined time has lapsed, the consumer premises equipment is reconnected as shown at block 114.

Operation of the System 12.1

The system 12.1 operates substantially in the same manner as the system 12 except that, as the threshold detector 38 is located in the central unit 16.1, its operation is not controlled via the line 14. The line 14 merely controls the CPE switches 42 and the short circuit switch 40 via the controller 34 located in the slave device 10.1. The threshold detector 38 detects when the predetermined threshold is reached and the microprocessor 56 instructs the RTU 18 accordingly.

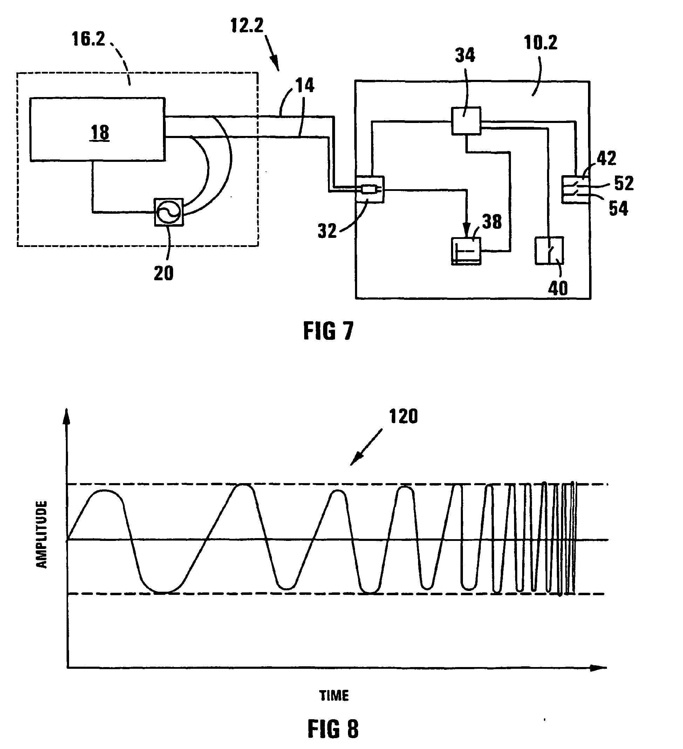

Referring in particular to Figures 7 to 10 of the drawings, reference numeral 12.2 generally indicates a further embodiment of a system, in accordance with the invention, for testing a telecommunication line 14. The system 12.2 resembles the systems 12, 12.1 and, accordingly, like reference numerals have been used to indicate the same or similar features.

The system 12.2 includes a central unit 16.2 including a RTU 18 and a signal generator 20. Unlike the signal generator 20 of the systems 12, 12.1 which generate a test signal 26 of increasing amplitude, the signal generator 20 of the system 12.2 generates a test signal 120 (see Figure 8) of constant amplitude but of increasing frequency. The slave unit or device 10.2 substantially resembles the slave device 10 but does not include the bandpass filter 26. It preferably also includes a power supply unit 30.

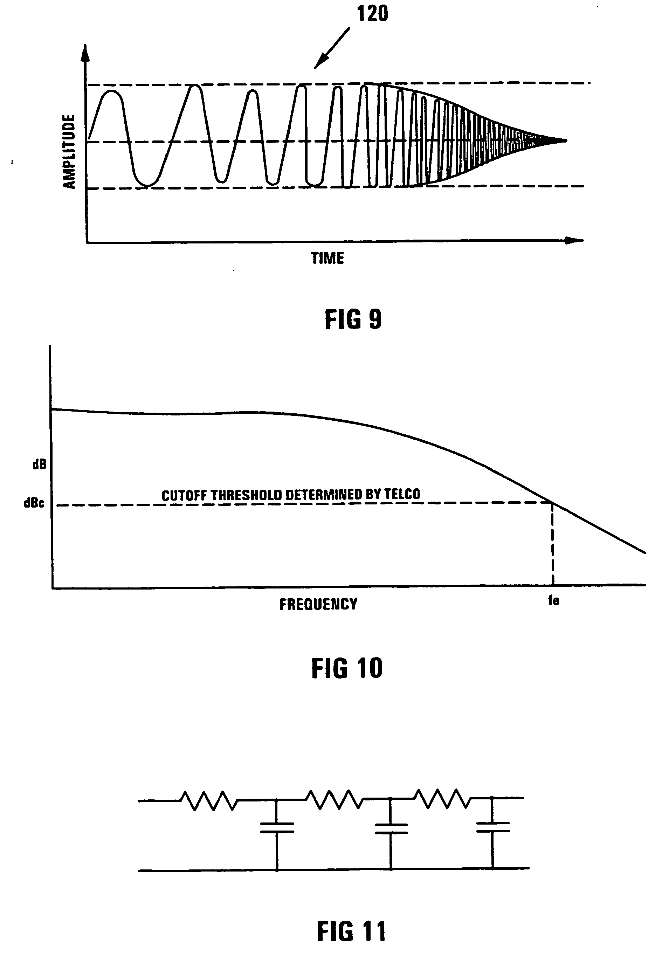

When testing telecommunication lines with the system 12.2, a switching arrangement (not shown) selectively connects the line 14 to the RTU 18 and the signal generator 20. The test signal 120 is then applied to the line 14. Due to the filter effect of the line 14 (see equivalent circuit of the line 14 as shown in Figure 11), the signal is progressively attenuated as the frequency of the test signal 120 is increased (see Figures 9 and 10). When the signal received by the slave device 10.2 reaches or drops to a predetermined low value, the threshold detector 38 triggers the controller 34 to short the line 14 by means of the short circuit switch 40. The shorted line is then detected by the central unit 16.2 and the attenuation in the line 14 is determined as set out above with reference to the systems 12, 12.1.

It is believed that the time required to test the line 14 may be reduced by the system 12.2. In particular, instead of applying a multitude of different test signals each of a particular frequency and increasing amplitude, a single test signal 120 of constant amplitude and increasing frequency is applied thereby reducing testing time especially when a large number of lines are to be tested. Further, unlike the system 12, the system 12.2 does not include a variable gain amplifier 22 in the central unit 16.2 and a bandpass filter 36 in the slave device 10.2 thereby reducing manufacturing costs of the central unit 16.2 and the slave device 10.2.

It is believed that the invention, as illustrated, provides an enhanced system 12, 12.1, 12.2 for testing the telecommunication line 14.

**Claims**

1. A system (12) for testing a telecommunication line (14), the system (12) including
   a central unit (16) including
   signal generation means (20, 22) capable of generating a test signal (26, 120) of increasing amplitude, the signal generation means (20, 22) being operatively connected to an exchange end of the line (14) ; and
   comparator means (18) connected to the signal generation means (20, 22);
   at least one remote unit connectable to a subscriber unit end of the line (14), the remote unit being operable under control of the central unit (16) selectively to disconnect the subscriber unit; and
   threshold detection means (38) for detecting when the test signal (26, 120) reaches a predetermined threshold after having travelled along the line (14) and, in response thereto, the comparator means (18) compares the predetermined threshold with the amplitude of the test signal (26) applied to the line (14) when the predetermined threshold is reached.

2. A system (12) as claimed in Claim 1, in which the central unit (16) includes line connection means (28) for progressively connecting the signal generation means (20, 22) to a plurality of lines (14) in an automated fashion thereby to test a plurality of lines (14).

3. A system (12) as claimed in Claim 1 or Claim 2, which includes a portable housing in which the central unit (16) is mounted.

4. A system (12) as claimed in any one of the preceding claims, in which the threshold detection means (38) is provided in the central unit (16).

5. A system (12) as claimed in any one of the preceding Claims 1 to 3 inclusive, in which the threshold detection means (38) is provided in the remote unit.

6. A system (12) as claimed in any one of the preceding claims, in which the remote unit includes a controller (34) for controlling operation of the unit and shorting means (40, 44, 46) connected to the subscriber unit end of the line (14), the controller (34) being responsive to the threshold detection means (38) and, when the predetermined threshold is reached, the controller (34) being operable to activate the shorting means (40, 44, 46) to short-circuit the line (14) in response to which the comparator means (18) compares the predetermined threshold with the amplitude of the test signal (26, 120) applied to the line (14).

7. A system (12) as claimed in any one of the preceding claims, in which the test signal (26, 120) is of a set frequency and of increasing amplitude, the threshold detection means (38) including filter means (36) for filtering the test signal (26, 120) received by the threshold detection means (38).

8. A system (12) as claimed in any one of the preceding claims, in which the test signal (26, 120) is a sine wave signal.

9. A system (12) as claimed in Claim 7 or Claim 8, in which the filter means (36) is an adjustable filter operable to adjust its filtering characteristics under control of the controller (34).

10. A system (12) as claimed in Claim 9, in which the filter (36) is a bandpass filter and the controller (34) is operable to adjust its centre frequency upon command from the central unit (16).

11. A system (12) as claimed in any one of the preceding Claims 6 to 10 inclusive, in which the signal generation means (20, 22) is operable selectively to generate a plurality of test signals (26, 120) at different frequencies and the controller (34) adjusts the centre frequency of the filter (36) to correspond to the frequency of the particular test signal (26, 120).

12. A system (12) as claimed in any one of the preceding claims, in which the remote device includes a power supply unit which sources power from the telecommunication line (14) and powers circuitry of the remote device.

13. A system (12) as claimed in any one of the preceding claims, in which the remote unit includes a subscriber line interface circuit (42) capable of protecting the subscriber unit.

14. A system (12) as claimed in any one of the preceding claims, which includes switching means operable selectively to connect and to disconnect the subscriber unit and the threshold detection means (38) to and from the line (14).

15. A method of testing a telecommunication line (14), the method including
applying a test signal (26) of increasing amplitude to the line (14)
sensing when the amplitude of the test signal (26) reaches a predetermined threshold after having travelled along the line (14); and
comparing the predetermined threshold and the amplitude of the test signal (26) applied to the line (14) when the predetermined threshold is reached.

16. A method as claimed in Claim 15, which includes applying the test signal (26) progressively in an automated fashion to a plurality of lines (14) thereby to test the plurality of lines (14) one at a time.

17. A method as claimed in Claim 15 or Claim 16, in which the predetermined threshold is sensed at a subscriber unit end of the line (14).

18. A method as claimed in Claim 15 or Claim 16, In which the predetermined threshold is sensed at an exchange end of the line (14).

19. A method as claimed in any one of the preceding Claims 15 to 18 inclusive, which includes shorting a subscriber unit end of the line (14) when the predetermined threshold is reached to trigger the comparison between the predetermined threshold and the amplitude of the test signal (26) applied to the line (14).

20. A method as claimed in any one of the preceding Claims 15 to 19 inclusive, which includes applying a test signal (26) of a set frequency and increasing amplitude to the line (14)

21. A method as claimed in any one of Claims 15 to 19 inclusive, which includes applying a plurality of test signals (26) at different frequencies and adjusting a centre frequency of a filter (36) at the subscriber unit end of the line (14) and sensing when the predetermined threshold is reached at each different frequency.

22. Central testing apparatus for testing at least one telecommunication line (14), the apparatus being connectable to an exchange end of the line (14) and including a central unit (16) including
control means (18) for controlling operation of a slave device (10) operatively connected to a subscriber unit end of the line (14);
signal generation means (20, 22) capable of applying a test signal (26) of Increasing amplitude to the line (14); and
comparator means (18) to compare the amplitude of the test signal (26) applied to the line (14) with a predetermined threshold when the slave device (10) detects that the amplitude of the test signal (26) has reached the predetermined threshold after having travelled along the line (14).

23. Apparatus as claimed in Claim 22, in which the central unit (16) includes line connection means (28) for progressively connecting the signal generation means (20, 22) to a plurality of lines (14) in an automated fashion thereby to test a plurality of lines (14).

24. Apparatus as claimed in Claim 22 or Claim 23, which includes a portable housing in which the central unit (16) is mounted.

25. Apparatus as claimed in any one of the preceding Claims 22 to 24, which includes sensing means (18) for sensing when the line (14) is shorted and, in response thereto, the comparator means (18) compares the predetermined threshold with the amplitude of the test signal (26).

26. Apparatus as claimed in Claim 25, in which the signal generation means (20, 22) is operable selectively to generate a plurality of test signals (26) at different frequencies and provide an instruction signal to the slave device (10) to adjust a centre frequency of its filter (36) to correspond to the frequency of the particular test signal (26).

**Patentansprüche**

1. Ein System (12) zum Testen einer Kommunikationsverbindung (14), wobei das System (12)
eine Zentraleinheit (16) einschließlich eines Signalgenerators (20, 22), der ein Testsignal (26, 120) von zunehmender Amplitude generieren kann, wobei der Signalgenerator (20, 22) funktionell mit einem Schaltstellenende der Verbindung (14) verbunden ist,
eine mit dem Signalgenerator (20, 22) verbundene Vergleichsvorrichtung (18),
wenigstens eine entfernte Einheit, die an ein Teilnehmereinheitsende der Verbindung (14) anschließbar ist, wobei die entfernte Einheit unter Kontrolle der Zentraleinheit (16) die Teilnehmereinheit selektiv abkoppeln kann, und
eine Schwellwert-Erkennungsvorrichtung (38) umfasst, die feststellt, wann das Testsignal (26, 120) nach der Übertragung entlang der Verbindung (14) einen vorgegebenen Schwellwert erreicht,
wobei die Vergleichsvorrichtung (18) in Reaktion auf den erreichten Schwellwert, den vorgegebenen Schwellwert mit der Amplitude desjenigen Testsignals (26) vergleicht, das in die Verbindung (14) bei Erreichen des vorgegebenen Schwellwerts eingespeist wird.

**2.** System nach Anspruch 1, wobei die Zentraleinheit (16) eine Verbindungs-Anschlussvorrichtung (28) zum automatischen sequentiellen Verbinden des Signalgenerators (20, 22) mit einer Mehrzahl von Verbindungen (14) zu deren Test umfasst.

**3.** System nach Anspruch 1 oder 2, mit einem tragbaren Gehäuse, in dem die Zentraleinheit (16) montiert ist.

**4.** System nach Anspruch 1, 2 oder 3, wobei die Schwellwert-Erkennungsvorrichtung (38) von der Zentraleinheit (16) umfasst ist.

**5.** System nach Anspruch 1, 2 oder 3, wobei die Schwellwert-Erkennungsvorrichtung (38) von der entfernten Einheit umfasst ist.

**6.** System nach einem der vorangehenden Ansprüche,
wobei die entfernte Einheit für deren Steuerung eine Steuereinheit (34) sowie am Teilnehmereinheitsende der Verbindung (14) angeschlossene Kurzschlußvorrichtungen (40, 44, 46) umfasst,
wobei die Steuereinheit (34) auf die Schwellwert-Erkennungsvorrichtung (38) reagiert und, falls der vorgegebene Schwellwert erreicht wurde, die Kurzschlußvorrichtungen (40, 44, 46) aktivieren kann um die Verbindung (14) kurzzuschließen, wonach die Vergleichsvorrichtung (18) den vorgegebenen Schwellwert mit der Amplitude des an die Verbindung (14) angelegten Testsignals (26, 120) vergleicht.

**7.** System (12) nach einem der vorangehenden Ansprüche,
wobei das Testsignal (26, 120) eine vorgegebene Frequenz und zunehmende Amplitude hat und die Schwellwert-Erkennungsvorrichtung (38) eine Filtervorrichtung (36) umfasst, die das von der Schwellwert-Erkennungsvorrichtung (38) empfangene Testsignal (26, 120) filtert.

**8.** System nach einem der vorangehenden Ansprüche, wobei das Testsignal (26, 120) ein Sinussignal ist.

**9.** System nach Anspruch 7 oder 8, wobei die Filtervorrichtung (36) ein verstellbarer Filter ist, dessen Filtereigenschaften von der Steuereinheit (34) einstellbar sind.

**10.** System nach Anspruch 9, wobei der Filter (36) ein Bandpassfilter ist, dessen Mittenfrequenz durch die Steuereinheit (34) unter Kontrolle der Zentraleinheit (16) eingestellt werden kann.

**11.** System nach einem der Ansprüche 6 bis 10, wobei der Signalgenerator (20, 22) steuerbar eine Reihe von Testsignalen (26, 120) mit verschiedenen Frequenzen erzeugen und die Steuereinheit (43) die Mittenfrequenz des Filters (36) einstellen kann, damit diese mit der Frequenz des jeweiligen Testsignals (26, 120) übereinstimmt.

**12.** System nach einem der vorangehenden Ansprüche, wobei die entfernte Einheit eine Stromversorgung umfasst, die der Kommunikationsverbindung (14) Strom zur Versorgung von von der entfernten Einheit umfassten Schaltungen entnimmt.

**13.** System nach einem der vorangehenden Ansprüche, wobei die entfernte Einheit eine Teilnehmerverbindungs-Schnittstellenschaltung (42) zum Schutz der Teilnehmereinheit umfasst.

**14.** System nach einem der vorangehenden Ansprüche, mit einer Schaltvorrichtung, mittels derer die Teilnehmereinheit und die Schwellwert-Erkennungsvorrichtung (38) selektiv an die Verbindung ankoppelbar oder von dieser abkoppelbar sind.

**15.** Verfahren zum Testen einer Kommunikationsverbindung (14) mit folgenden Schritten:

Einspeisen eines Testsignals (26) von zunehmender Amplitude in die Verbindung (14);
Messen, wann die Amplitude des Testsignals (26) nach der Übertragung entlang der Verbindung (14) einen vorgegebenen Schwellwert erreicht; und
Vergleichen des vorgegebenen Schwellwerts mit der Amplitude desjenigen Testsignals (26), das in die Verbindung (14) bei Erreichen des vorgegebenen Schwellwerts seingespeist wird.

**16.** Verfahren nach Anspruch 15, wobei das Testsignal (26) automatisch sequentiell in eine Mehrzahl Verbindungen (14) für deren sequentiellen Test eingespeist wird.

**17.** Verfahren nach Anspruch 15 oder 16, wobei der vorgegebene Schwellwert am Teilnehmereinheitsende der Verbindung (14) gemessen wird.

**18.** Verfahren nach Anspruch 15 oder 16, wobei der vorgegebene Schwellwert am Schaltstellenende der Verbindung (14) gemessen wird.

**19.** Verfahren nach einem der Ansprüche 15 bis 18, wobei das Teilnehmereinheitsende der Verbindung (14) kurzgeschlossen wird, wenn der vorgegebene Schwellwert erreicht wird, um den Vergleich des vorgegebenen Schwellwerts mit der Amplitude des in die Verbindung (14) eingespeisten Testsignals (26) anzuregen.

**20.** Verfahren nach einem der Ansprüche 15 bis 19, wobei ein Testsignal (26) mit einer bestimmten Frequenz und zunehmender Amplitude in die Verbindung (14) eingespeist wird.

**21.** Verfahren nach einem der Ansprüche 15 bis 19, wobei eine Mehrzahl von Testsignalen (26) mit verschiedenen Frequenzen verwendet, eine Mittenfrequenz eines Filters (36) am Teilnehmereinheitsende der Verbindung entsprechend angepasst und gemessen wird, wann der vorgegebene Schwellwert bei jeder der verschiedenen Frequenzen erreicht wird.

**22.** Ein zentrales Testgerät zum Testen wenigstens einer Kommunikationsverbindung (14), wobei das Gerät an einem Schaltstellenende der Verbindung (14) anschließbar ist und eine Zentraleinheit (16) enthält, die eine Steuervorrichtung (18), einen Signalgenerator (20, 22) und eine Vergleichsvorrichtung (18) umfasst,
wobei die Steuervorrichtung (18) zum Steuern einer an ein Teilnehmereinheitsende der Verbindung (14) angeschlossen entfernten Einheit (10) vorgesehen ist,
wobei der Signalgenerator (20, 22) zum Einspeisen eines Testsignals (26) mit zunehmender Amplitude in die Verbindung (14) vorgesehen ist und
wobei die Vergleichsvorrichtung (18) zum Vergleichen einer Amplitude des in die Verbindung (14) eingespeisten Testsignals (26) mit einem vorgegebenen Schwellwert, wenn die entfernte Einheit (10) feststellt, dass die Amplitude des Testsignals (26) nach Übertragung entlang der Verbindung (14) den vorgegebenen Schwellwert erreicht hat, vorgesehen ist.

**23.** Testgerät nach Anspruch 22, wobei die Zentraleinheit (16) eine Verbindungs-Anschlußvorrichtung (28) umfasst, mit welcher der Signalgenerator (20,22) automatisch und sequentiell mit einer Anzahl Verbindungen (14) zu deren Test verbindbar ist.

**24.** Testgerät nach Anspruch 22 oder 23, mit einem tragbaren Gehäuse, in dem die Zentraleinheit (16) montiert ist.

**25.** Testgerät nach einem der Ansprüche 22 bis 24, mit einer Meßvorrichtung (18) zum Messen, wann die Verbindung (14) kurzgeschlossen wird und als Reaktion darauf die Vergleichsvorrichtung (18) den vorgegebenen Schwellwert mit der Amplitude des Testsignals (26) vergleicht.

**26.** Testgerät nach Anspruch 25, in welchem der Signalgenerator (20, 22) zur selektiven Erzeugung einer Mehrzahl von Testsignale (26) mit verschiedenen Frequenzen und zur Abgabe eines Befehlssignals an die entfernte Einheit (10) zur Anpassung einer Mittenfrequenz eines Filters (36) an die Frequenz des jeweiligen Testsignals betreibbar ist.

**Revendications**

**1.** Un système (12) pour tester une ligne de télécommunication (14), le système (12) incluant
une unité centrale (16) incluant
des moyens de génération de signal (20, 22) capables de générer un signal d'essai (26, 120) d'amplitude croissante, les moyens de génération de signal (20, 22) étant connectés de manière opérationnelle à l'extrémité de central de la ligne (14) ; et
un moyen formant comparateur (18) connecté aux moyens de génération de signal (20, 22) ;
au moins une unité à distance pouvant être connectée à une extrémité d'unité d'abonné de la ligne (14), l'unité à distance pouvant être actionnée sous le contrôle de l'unité centrale (16) de manière sélective afin de déconnecter l'unité d'abonné ; et
un moyen de détection de seuil (38) pour détecter le moment auquel le signal d'essai (26, 120) atteint un seuil prédéfini après avoir circulé le long de la ligne (14) et, en réponse à ceci, le moyen formant comparateur (18) compare le seuil prédéfini à l'amplitude du signal d'essai (26) appliqué sur la ligne (14) lorsque le seuil prédéfini est atteint.

2. Un système (12) tel que revendiqué dans la revendication 1, dans lequel l'unité centrale (16) inclut un moyen de connexion de ligne (28) pour connecter progressivement les moyens de génération de signal (20, 22) à une pluralité de lignes (14) de manière automatisée pour tester de ce fait une pluralité de lignes (14).

3. Un système (12) tel que revendiqué dans la revendication 1 ou la revendication 2, lequel inclut un logement portatif dans lequel l'unité centrale (16) est montée.

4. Un système (12) tel que revendiqué dans n'importe laquelle des revendications précédentes, dans lequel le moyen de détection de seuil (38) est fourni dans l'unité centrale (16).

5. Un système (12) tel que revendiqué dans n'importe laquelle des revendications précédentes, 1 à 3 comprises, dans lequel le moyen de détection de seuil (38) est fourni dans l'unité à distance.

6. Un système (12) tel que revendiqué dans n'importe laquelle des revendications précédentes, dans lequel l'unité à distance inclut un contrôleur (34) pour contrôler le fonctionnement de l'unité et des moyens de mise en court-circuit (40, 44, 46) connectés à l'extrémité d'unité d'abonné de la ligne (14), le contrôleur (34) étant sensible au moyen de détection de seuil (38) et, lorsque le seuil prédéfini est atteint, le contrôleur (34) peut être actionné pour activer les moyens de mise en court-circuit (40, 44, 46) pour court-circuiter la ligne (14) en réponse à quoi le moyen formant comparateur (18) compare le seuil prédéfini à l'amplitude du signal d'essai (26, 120) appliqué sur la ligne (14).

7. Un système (12) tel que revendiqué dans n'importe laquelle des revendications précédentes, dans lequel le signal d'essai (26, 120) est d'une fréquence donnée et d'une amplitude croissante, le moyen de détection de seuil (38) incluant un moyen formant filtre (36) pour filtrer le signal d'essai (26, 120) reçu par le moyen de détection de seuil (38).

8. Un système (12) tel que revendiqué dans n'importe laquelle des revendications précédentes, dans lequel le signal d'essai (26, 120) est un signal sinusoïdal.

9. Un système (12) tel que revendiqué dans la revendication 7 ou la revendication 8, dans lequel le moyen formant filtre (36) est un filtre réglable pouvant être actionné pour ajuster ses caractéristiques de filtrage sous le contrôle du contrôleur (34).

10. Un système (12) tel que revendiqué dans la revendication 9, dans lequel le filtre (36) est un filtre passe-bande et le contrôleur (34) peut être actionné pour ajuster sa fréquence centrale sur ordre de l'unité centrale (16).

11. Un système (12) tel que revendiqué dans n'importe laquelle des revendications précédentes, 6 à 10 comprises, dans lequel le moyen de génération de signal (20, 22) peut être actionné de manière sélective pour générer une pluralité de signaux d'essai (26, 120) à différentes fréquences et le contrôleur (34) ajuste la fréquence centrale du filtre (36) pour correspondre à la fréquence du signal d'essai particulier (26, 120).

12. Un système (12) tel que revendiqué dans n'importe laquelle des revendications précédentes, dans lequel le dispositif à distance inclut une unité d'alimentation électrique qui s'approvisionne en électricité à partir de la ligne de télécommunication (14) et alimente la circuiterie du dispositif à distance.

13. Un système (12) tel que revendiqué dans n'importe laquelle des revendications précédentes, dans lequel l'unité à distance inclut un circuit d'interface de ligne d'abonné capable de protéger l'unité d'abonné.

14. Un système (12) tel que revendiqué dans n'importe laquelle des revendications précédentes, lequel inclut un moyen de commutation pouvant être actionné de manière sélective pour connecter l'unité d'abonné et le moyen de détection de seuil (38) à la ligne (14) et pour les déconnecter de celle-ci.

15. Une méthode pour tester une ligne de télécommunication (14), la méthode incluant
appliquer un signal d'essai (26) d'amplitude croissante sur la ligne (14),
capter le moment auquel l'amplitude du signal d'essai (26) atteint un seuil prédéfini après avoir circulé le long de la ligne (14) ; et
comparer le seuil prédéfini et l'amplitude du signal d'essai (26) appliqué sur la ligne (14) lorsque le seuil prédéfini est atteint.

**16.** Une méthode telle que revendiquée dans la revendication 15, laquelle inclut appliquer le signal d'essai (26) progressivement de manière automatisée sur une pluralité de lignes (14) pour tester de ce fait la pluralité de lignes (14) une ligne à la fois.

**17.** Une méthode telle que revendiquée dans la revendication 15 ou la revendication 16, dans laquelle le seuil prédéfini est capté au niveau d'une extrémité d'unité d'abonné de la ligne (14).

**18.** Une méthode telle que revendiquée dans la revendication 15 ou la revendication 16, dans laquelle le seuil prédéfini est capté au niveau d'une extrémité de central de la ligne (14).

**19.** Une méthode telle que revendiquée dans n'importe laquelle des revendications, 15 à 18 comprises, laquelle inclut une mise en court-circuit d'une extrémité d'unité d'abonné de la ligne (14) lorsque le seuil prédéfini est atteint afin de déclencher la comparaison entre le seuil prédéfini et l'amplitude du signal d'essai (26) appliqué sur la ligne (14).

**20.** Une méthode telle que revendiquée dans n'importe laquelle des revendications précédentes, 15 à 19 comprises, laquelle inclut appliquer un signal d'essai (26) d'une fréquence donnée et d'une amplitude croissante sur la ligne (14).

**21.** Une méthode telle que revendiquée dans n'importe laquelle des revendications, 15 à 19 comprises, laquelle inclut appliquer une pluralité de signaux d'essai (26) à différentes fréquences et ajuster une fréquence centrale d'un filtre (36) au niveau de l'extrémité d'unité d'abonné de la ligne (14), et capter le moment auquel le seuil prédéfini est atteint à chaque fréquence différente.

**22.** Appareil de test central pour tester au moins une ligne de télécommunication (14), l'appareil pouvant être connecté à une extrémité de central de la ligne (14) et incluant une unité centrale (16), incluant
un moyen de contrôle (18) pour contrôler le fonctionnement d'un dispositif esclave (10) connecté de manière opérationnelle à une extrémité d'unité d'abonné de la ligne (14) ;
des moyens de génération de signal (20, 22) capables d'appliquer un signal d'essai (26) d'amplitude croissante sur la ligne (14) ; et
un moyen formant comparateur (18) pour comparer l'amplitude du signal d'essai (26) appliqué sur la ligne (14) à un seuil prédéfini lorsque le dispositif esclave (10) détecte que l'amplitude du signal d'essai (26) a atteint le seuil prédéfini après avoir circulé le long de la ligne (14).

**23.** Appareil tel que revendiqué dans la revendication 22, dans lequel l'unité centrale (16) inclut un moyen de connexion de ligne (28) pour connecter progressivement les moyens de génération de signal (20, 22) à une pluralité de lignes (14) de manière automatisée pour tester de ce fait une pluralité de lignes (14).

**24.** Appareil tel que revendiqué dans la revendication 22 ou la revendication 23, lequel inclut un logement portatif dans lequel l'unité centrale (16) est montée.

**25.** Appareil tel que revendiqué dans n'importe laquelle des revendications précédentes 22 à 24, lequel inclut un moyen de captage (18) pour capter le moment auquel la ligne (14) est court-circuitée et, en réponse à cela, le moyen formant comparateur (18) compare le seuil prédéfini à l'amplitude du signal d'essai (26).

**26.** Appareil tel que revendiqué dans la revendication 25, dans lequel le moyen de génération de signal (20, 22) peut être actionné de manière sélective pour générer une pluralité de signaux d'essai (26) à différentes fréquences et pour fournir un signal d'instruction au dispositif esclave (10) pour ajuster une fréquence centrale de son filtre (36) pour correspondre à la fréquence du signal d'essai particulier (26).

**FIG 1**

FIG 2

EP 1 226 707 B1

**FIG 3**

EP 1 226 707 B1

FIG 4

RTU —18

60

PRE-QUALIFICATION
REQUEST RECEIVED    N    —64

62

66

Y

INSTRUCT
1. Slave unit to disconnect CPE
2. Slave unit to set limits on filter for given frequency
3. Slave unit to monitor threshold
   Set signal generator to first test frequensy
   Set gain on variable gain amp to begin incrementing
   amplitude

70 — START TIME OUT TIMER

72

N

THRESHOLD DETECTED    N →    TIMED OUT

76

Y

GET GAIN SETTING —78

CALCULATE ATTENUATION —80

INCREMENT FREQUENCY
TO TEST    —82

N    TESTED ALL FREQUENCIES —84

86 — END

FIG 5

**FIG 6**

16.2

12.2

14

34

10.2

18

20

32

38

42
52
54

40

**FIG 7**

120

AMPLITUDE

TIME

**FIG 8**

**120**

**FIG 9**

**FIG 10**

**FIG 11**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5661776 A

- US 4486627 A